# EUROPEAN PATENT APPLICATION

(11) **EP 4 431 393 A1**
(43) Date of publication of application: **18.09.2024**
(21) Application number: 23275043.0
(22) Date of filing: 14.03.2023
(51) Int. Cl.: B64D 11/06, B64D 11/00

(54) **PASSENGER SEATING MODULE WITH MULTIPLE CONFIGURATIONS**

(71) Applicant: B/E Aerospace, Inc., Winston-Salem, NC 27105 (US)
(72) Inventor: BOOTH, Richard, London W1W 6QD (GB); LOUDON, Alex, London W1W 6QD (GB); PARKER, Chris, London W1W 6QD (GB)
(74) Representative: Dehns

(57) **Abstract**

A passenger seating module for nesting with another passenger seating module in a forward-aft direction, a passenger seating arrangement, a kit of parts for assembling a passenger seating arrangement, and a method of assembling a passenger seating module, are disclosed herein.

The passenger seating module (100, 200) comprises: a seat module (120, 220); and a furniture module (110, 210) comprising a recess (111, 211) configured to receive the seat module (120, 220). The recess (111, 211) is configured to receive the seat module (120, 220) in a plurality of orientations.

## Description

### Technical Field

The present invention relates to passenger seating modules and passenger seating arrangements. In particular, a passenger seating module capable of receiving a seat module in a plurality of orientations, used to create a variety of possible passenger seating arrangements, is contemplated herein.

### Background

Passenger seating modules are often used when providing luxury, or business-class, seats on commercial passenger vehicles such as airplanes. The passenger seating module will generally comprise a furniture shell that defines the outer dimensions of the passenger seating module, and the seat itself. Passenger seating modules are often provided in a nested arrangement, such that a rear partition wall of another passenger seating module in front of a passenger's own passenger seating module will define a front wall of the passenger's seating module. A passenger seating arrangement is thus produced by nesting a plurality of the passenger seating modules together.

Passenger seating modules employ standardised components or parts, thereby achieving a higher degree of compatibility between the various components and parts. Such an approach may lower costs associated with manufacture, since a single template for a component or part can be readily reused. However, this approach may reduce the number of possible passenger seating arrangements achievable using a single set of standardised components. Approached from another angle, existing sets of standardised components for assembling a passenger seating arrangement may require a greater number of unique components, or variants of components, to produce a more customisable passenger seating arrangement.

Accordingly, it is an objective of at least the preferred embodiments of the present invention to provide a greater number of possible passenger seating arrangements using a set of modular or standardised components.

### Summary

Viewed from a first aspect, there is provided a passenger seating module for nesting with another passenger seating module in a forward-aft direction, comprising: a seat module; and a furniture module comprising a recess configured to receive the seat module; wherein the recess is configured to receive the seat module in a plurality of orientations.

The recess may be configured to receive the seat module at an angle of between 0 and 45 degrees relative to the forward-aft direction.

The plurality of orientations may include a first orientation in which the seat module is received at an angle of between 0 and 10 degrees relative to the forward-aft direction.

The plurality of orientations may include a second orientation in which the seat module is received askew relative to the forward-aft direction.

The seat module may be configured to be received of an angle of between 20 and 40 degrees relative to the forward-aft direction.

The passenger seating module may comprise a platform module; wherein the seat module is configured to be mounted on the platform module; and wherein the platform module is configured to secure the seat module in a selected orientation of the plurality of orientations.

The furniture module may comprise a rear partition wall, a side partition wall and a console; wherein each of the rear partition wall, the side partition wall and the console at least partially define the recess.

The seat module may comprise a seat configured to move between an upright position and a reclined position.

The reclined position may be a substantially horizontal position.

Viewed from a second aspect, there is provided a passenger seating arrangement comprising: a plurality of passenger seating modules; wherein each passenger seating module is a passenger seating module according to the first aspect; and wherein each passenger seating module is nested directly in front of and/or behind an adjacent passenger seating module in the forward-aft direction.

The plurality of passenger seating modules may comprise first passenger seating modules comprising a first furniture module and second passenger seating modules comprising a second furniture module; and wherein the first furniture module and the second furniture module are mirror images of one another.

One of the passenger seating modules may comprise a seat module received inline relative to the forward-aft direction, wherein another of the passenger seating modules comprise a seat module received askew relative to the forward-aft direction, and wherein the one and the another passenger seating modules are nested directly adjacent in the forward-aft direction.

Viewed from a third aspect, there is provided an aircraft comprising a plurality of passenger seating modules according to the first aspect, or a passenger seating arrangement according to the second aspect.

Viewed from a fourth aspect, there is provided kit of parts for assembling a passenger seating arrangement according to the second aspect, comprising: a plurality of seat modules; and a plurality of furniture modules comprising a recess configured to receive any one of the plurality of seat modules; wherein each furniture module is configured to receive a respective seat module in a plurality of orientations.

Each furniture module may be identical to or be a mirror image of every other furniture module.

Viewed from a fifth aspect, there is provided a method of assembling a passenger seating module according to the first aspect, comprising: installing the seat module in the recess at a selected orientation.

### Brief description of the drawings

Certain exemplary embodiments of the invention are described below by way of example only and with reference to the accompanying drawings in which:
Figure 1 shows a first passenger seating module alone and as part of two seating configurations in a plan view;
Figure 2 shows a second passenger seating module alone and as part of two seating configurations in a plan view;
Figure 3A shows a passenger seating arrangement in a plan view;
Figure 3B shows a portion of the passenger seating arrangement of figure 3A in a perspective view;
Figure 4 shows a passenger seating arrangement in an aircraft cabin in a plan view;
Figure 5 shows another passenger seating arrangement in an aircraft cabin in a plan view;
Figure 6 shows another passenger seating arrangement in an aircraft cabin in a plan view;
Figure 7 shows another passenger seating arrangement in an aircraft cabin in a plan view;
Figure 8 another passenger seating arrangement in an aircraft cabin in a plan view; and
Figure 9 another passenger seating arrangement in an aircraft cabin in a plan view.

### Detailed description

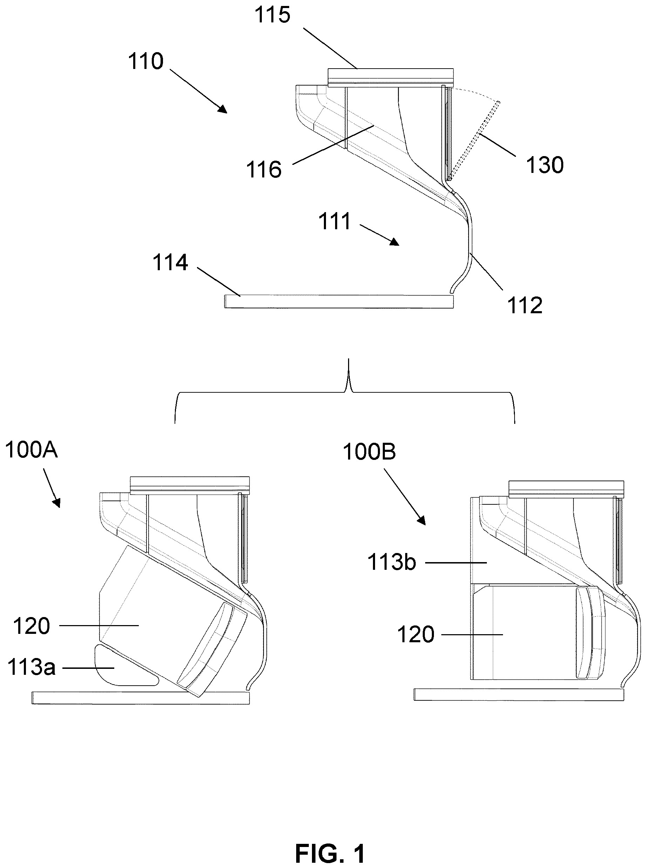

Figure 1 shows a first furniture module 110 alone and as part of a passenger seating module 100. The passenger seating module 100 is shown in two possible seating configurations 100A and 100B. The passenger seating module comprises the first furniture module 110 in combination with a seat module 120.

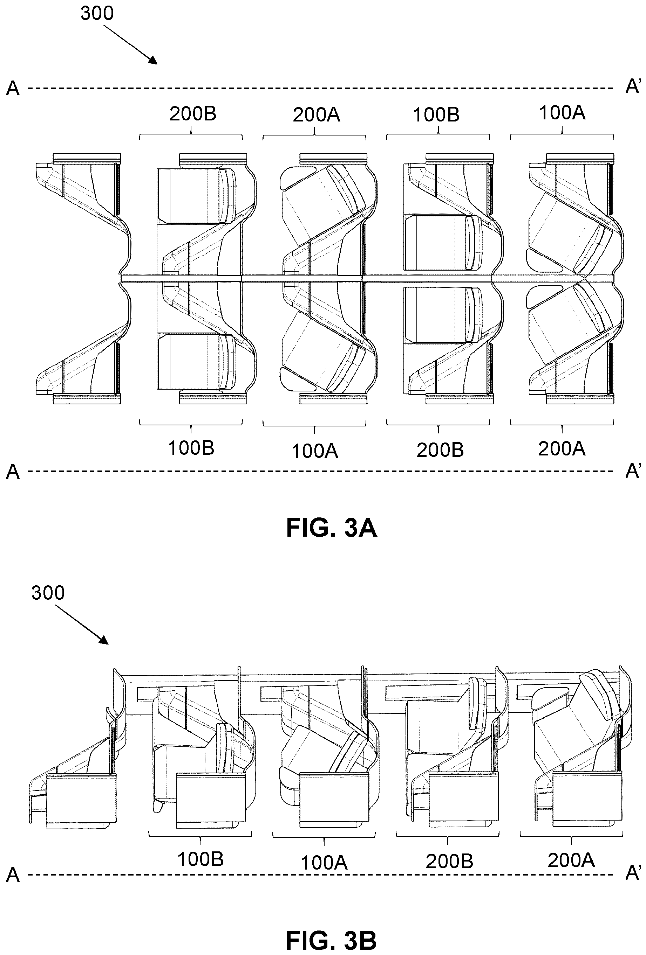

The passenger seating module 100 is suitable for nesting, i.e. configured to nest, with another passenger seating module 100 in a forward-aft direction. In other words, the passenger seating module 100 is a modular passenger seating apparatus suitable for tessellating with another modular passenger seating apparatus. The passenger seating module 100 is shown nested, or tessellated, in each of figures 3 to 9 as described below.

The forward-aft direction in which the passenger seating module 100 may be nested is often parallel to a forward-aft direction of a vehicle in which the passenger seating module 100 is located, when in use. However, in other arrangements the forward-aft direction in which the passenger seating module 100 may be askew, or not parallel, to the forward-aft-direction of the vehicle in which the passenger seating module 100 is located.

The furniture module 110 comprises a recess 111 configured to receive a seat module 120. The recess 111 is a space or volume in which the seat module 120 is configured to be received, relative to the furniture module 110. The recess 111 is configured to receive the seat module 120 in a plurality of orientations. Two possible orientations are illustrated in figure 1 by way of example. In a first orientation, the seat module 120 is received askew to a forward-aft direction of the furniture module 110. In such a configuration, the passenger seating module 100A may be suitable for providing seating in a herringbone configuration. In a second orientation, the seat module 120 is received parallel to the forward-aft direction of the furniture module 110. In such a configuration, the passenger seating module 100B may be suitable for providing seating in an inline configuration.

By providing a furniture module 110 capable of receiving a seat module 120 in a plurality of orientations, a single furniture module 110 can be used to provide a multiplicity of different seating configurations. Using a single furniture module 110 that can receive a seat module 120 in a plurality of orientations, compared to a plurality of different furniture modules that can only each receive a seat module in a single respective orientation, enables a plurality of seating configurations and thus seating arrangements to be realisable using fewer variant furniture modules 120.

The furniture module 110 comprises a number of features and furnishings for improving the comfort and functionality of the passenger seating module 100. The furnishings of the furniture module 110 may be separate components that are subsequently assembled, or may be contiguous aspects of a common structure, or may be combinations thereof. Each of the various components and furnishings of the furniture module 110 are modular, or have part commonality, such that the furniture module 110 may be formed using a smaller suite of standardised components.

The furniture module 110 comprises a rear partition wall 112, a first side partition wall 114, a second side partition wall 115 and a console 116. One or more of the rear partition wall 112, the first side partition wall 114 and the console 116 at least partially define the recess 111. In some arrangements, the second side partition wall 115 also at least partially defines the recess 111.

The rear partition wall 112 comprises a front-facing side and the rear-facing side. The front-facing side faces into the volume of the passenger seating module 100, and thus faces in the forward direction of the forward-aft direction in which the passenger seating module 100 may be nested, which is preferably a forward direction or a direction of travel of a passenger. In the present embodiment as shown in figure 1, the rear partition wall 112 comprises a curved portion at least partially defining the recess 111, and a flat portion to which a display 130 is mounted. The rear-facing side faces away into the volume of the passenger seating module 100, and thus faces in an aftward direction of the forward-aft direction in which the passenger seating module 100 may be nested, which is preferably a direction opposite to the direction of travel of the passenger. It will be appreciated that the terms front-facing and rear-facing more clearly distinguish the two opposing faces of the rear partition wall 112 and do not limit the orientation of the passenger seating module 100 relative to a passenger's direction of travel.

Each of the side partition walls 114, 115 are oriented substantially perpendicular to the rear partition wall 112, and serve as a dividing partition between the interior space of the passenger seating module 100 and any adjacent passenger seating modules, or an aisle of a cabin of a vehicle in which the passenger seating module 100 may be situated.

One of the first side partition wall 114 and the second side partition wall 115 may be provided with an access door (not shown). The door is preferably a sliding door, or one which moves in a plane parallel with the side partition doors 114, 115.

One of the first side partition wall 114 and the second side partition wall 115, or the other of the first side partition wall 114 and the second side partition wall 115 if one is provided with a door, which may be slidably movable between a deployed configuration and a stowed configuration. In the deployed configuration, the side partition wall 114, 115 may be fully extended. In the stowed configuration, the side partition wall 114, 115 may be fully collapsed, retracted or hidden. Such a configuration may enable passengers in adjacent passenger seating modules 100 to have privacy or access, as desired.

In use, a passenger will preferably reside in the first furniture module 110 with their back facing towards the rear partition wall 112. Accordingly, the first side partition wall 114 may be regarded as a left side partition wall 114, and the second side partition wall 115 may be regarded as a right side partition wall 115. In use, the furniture module 110 faces in the forward direction relative to the forward-aft direction in which the passenger seating module 100 may be nested, and preferably faces in the forward direction or the direction of travel of a vehicle in which it is disposed. Accordingly, the first side partition wall 114 may also be regarded as a port side partition wall 114 and the second side partition wall 115 may also be regarded as a starboard side partition wall 115.

The console 116 is located adjacent to the recess 111, opposite the side partition wall 114 adjacent to the recess 111. In the first furniture module 110, the console 116 is located opposite the first side partition wall 114, and adjacent to the second side partition wall 115.

The console 116 provides one or more storage features for the passenger, such as a deployable tray table, or a surface on which the passenger may place one or more items, or the like. The console 116 may also house one or more electronic controls for requesting cabin assistance or controlling environmental aspects of the passenger seating module 100.

The console 116 defines an internal space or cavity accessible from the rear partition wall 112. The internal space or cavity preferably forms a footwell for the passenger seat of a passenger seating module located directly behind the passenger seating module 100 in the forward-aft direction.

The rear partition wall 112 comprises a display 130 mounted to a rear facing side of the rear partition wall 112. The display 130 may interactively display entertainment media to a passenger located directly behind the first furniture module 110 in the forward-aft direction. Accordingly, the rear partition wall 112 may form a forward partition wall of a furniture module located directly behind the first furniture module 110 in the forward-aft direction.

The display 130 is moveable between a stowed configuration, in which it lies flat against the rear partition wall 112, and a deployed configuration 130 by rotating the display 130 away from the rear partition wall 112. Providing a movable display 130 may enable a single display configuration to provide an optimal viewing angle for a passenger sitting in an inline or an askew seating configuration, thus improving compatibility and versatility of the passenger seating module 100. In other embodiments, the display 130 may be fixed to the rear partition wall 112 such that it is not movable.

The furniture module 110 also comprises a furnishing portion 113. The furnishing portion 113 is a divider or spacer that may provide support to the seat module 120, or may provide a surface on which a passenger may place one or more items. A different furnishing portion 113a, 113b may be used depending on the seating configuration of the passenger seating module 100A, 100B.

The seat module 120 comprises a seat. The seat comprises a seat portion, and one or more of a backrest portion, a headrest portion, and first and second lateral armrests. The seat module 120 of the present embodiment comprises a lie-flat seat, wherein the seat is configured to move between an upright position and a sleeping position. In the sleeping position, the seat may extend into the footwell defined by the passenger seating module located directly in front of the passenger seating module 100.

As stated above, the recess 111 is configured to receive the seat module 120 in a plurality of orientations. That is, the recess is configured to receive the seat module 120 at a plurality of angles (i.e. at least two different angles) relative to the furniture module 110. Accordingly, the seat module 120 is capable of being placed facing a direction or orientation selected from a plurality of possible directions or orientations, e.g. at a desired angle, relative to the forward-aft direction.

The angles may be defined between a direction in which the seat module 120 is oriented and a direction in which the furniture module 110 is oriented.

The direction in which the seat module 120 is considered to be oriented is the direction that the seat of the seat module 120 faces, i.e. the direction a passenger will face during normal use of the seat module 120 or a direction normal to a backrest of the seat when in an upright position.

The direction in which the furniture module 110 is considered to be oriented may be any of: the forward-aft direction in which the passenger seating module 100 may be nested; a direction normal to the front-facing or the rear-facing side of the rear partition wall 112; a direction of travel of the passenger seating module 100; or a direction parallel to an aisle from which the passenger seating module 100 is accessed. In the exemplary embodiment, these directions are all the same.

In the present embodiment, the recess 111 is configured to receive the seat module 120 at an angle of 0 degrees and at an angle of 30 degrees. An angle of 0 degrees represents an angle parallel to the direction of the furniture module 110.

In other embodiments, the recess 111 may be configured to receive the seat module 120 at one or more angles between 0 and 45 degrees; between 0 and 40 degrees; between 0 and 35 degrees; or between 0 and 30 degrees with respect to the direction of the furniture module 110.

The recess 111 may be configured to receive the seat module 120 in a plurality of discrete positions across the breadth of the range (for example, there may be a spacing of 5 degrees between each orientation). Alternatively, the recess 11 may be configured to receive the seat module 120 continuously across the breadth of the range, for example by positioning the seat module 120 by sliding or rotating it continuously, relative to the furniture module 111.

Where the seat module 120 is received at an angle relative to the furniture module 110, i.e. where the seat module 120 is received askew, the seat module 120 can be regarded as being in a herringbone seating configuration. The seat module 120 may be preferably received at an angle of about 30 degrees when received in the herringbone configuration, although other angles within the aforementioned range, such as 25 degrees, 35 degrees and 40 degrees, are contemplated, for example an angle of between 20 degrees and 40 degrees.

Where the seat module 120 is received at an angle of about 0 degrees relative to the furniture module 110, i.e. parallel to the direction of the furniture module 110, the seat module 120 can be regarded as being in an inline seating configuration. That is, in the inline seating configuration the recess 111 of the furniture module 110 receives the seat module 120 in a straight, or parallel manner. The seat module 120 accordingly faces substantially in the forward-aft direction which is a direction substantially parallel to the direction of the furniture seating module 110 and preferably in a direction of travel of the passenger seating module 100B. An angle of up to 10 degrees, or up to 5 degrees, away from the direction of the furniture module 110 may still be considered to an inline seating configuration.

Whilst in some embodiments the seat module 120 may be fixed directly to a floor of a cabin of a vehicle or aircraft or to the furniture module 110 itself, in other embodiments the passenger seating module 100 comprises a platform. The platform may provide an improved compatibility between the passenger seating module 100 and the floor of the vehicle in which the passenger seating module 100 is to be located. The platform may define the floor of the passenger seating module 100.

The platform comprises one or more fixing points for securing the seat module 120 in one of the plurality of orientations. The one or more fixing points may be configured to engage the seat tracks of the seat module 120. The platform may comprise a fixing point per orientation, a fixing point configured to fix the seat module 120 in each of the plurality of orientations, or a mixture thereof. For example, the fixing point could be a track that the seat module 120 may slidably engage and be fixed at the desired orientation. Alternatively, the fixing point could be a plurality of notches in which the seat module 120 may be positioned in and fixed at the desired orientation. In some embodiments, the fixing point may comprise a track in which the seat module 120 may slidably engage, the track comprising a plurality of discrete notches along its length which may position the seat module 120 at a desired orientation.

The furniture module 110 may also be fixed to the platform. Accordingly, the assembled passenger seating module 100 may be formed on the platform, with each passenger seating module 100 capable of being moved in the vehicle or cabin to suitably arrange the passenger seating modules.

The platform is preferably configured to tesselate with adjacent platforms, such that each passenger seating module 100 is suitably placed relative to one another. Each platform may be configured to engage an adjacent platform and/or may comprise one or more locating features. The use of the platform may assist with locating each passenger seating module 100 relative to one another.

The platform preferably comprises one or more mounting members configured to secure the platform to a floor of an aircraft cabin, for example by engaging one or more seat tracks belonging to the floor of the cabin. Each type of aircraft may comprise legacy seat tracks for attaching a passenger seating module to the floor of its cabin via respective mounting members. Accordingly, the platform can comprise a mounting member, or a set of mounting members, configured to engage the seat tracks of the floor of a plurality of different aircraft cabins, or can comprise a plurality of mounting members, or sets of mounting members, each configured to engage the seat tracks of the floor of a respective aircraft cabin. The mounting member(s) may improve the compatibility of the passenger seating module 100 with existing aircraft cabin architectures. The mounting members could be any suitable fastening for securing the platform to the fastening member of the aircraft, which can be seat tracks or an alternative fastening mechanism.

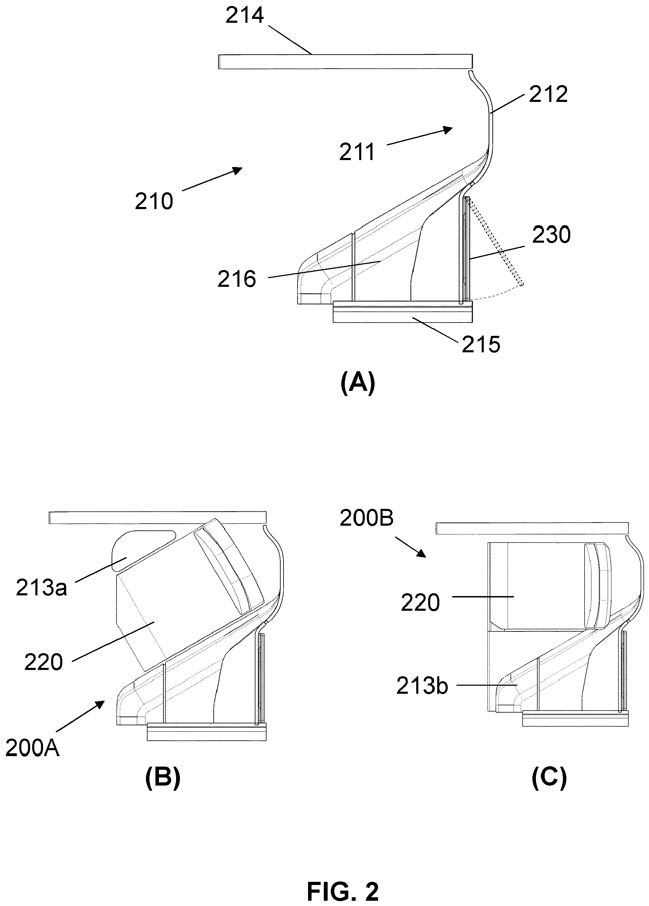

Figure 2 shows a second furniture module 210 alone and as part of a passenger seating module 200. The passenger seating module 200 is shown in two possible seating configurations 200A and 200B. The passenger seating module 200 comprises the second furniture module 210 in combination with a seat module 220.

The second furniture module 210 is a mirror image of the first furniture module 110. Thus, similarly, the second furniture module 210 comprises a recess 211 configured to receive a seat module 220. The recess 211 is configured to receive the seat module 220 in a plurality of orientations. Two possible orientations are illustrated in figure 2 by way of example. In a first orientation, the seat module 220 is received askew to the furniture module 210. In such a configuration, the passenger seating module 200A may be regarded as providing seating in a herringbone configuration. In a second orientation, the seat module 220 is received parallel to the furniture module 210. In such a configuration, the passenger seating module 200B may be regarded as providing seating in an inline configuration. It will be appreciated that, as shown in the figures, the passenger seating configurations 200A and 200B comprising the second furniture module 210 are mirror images of the passenger seating configurations 100A, 100B comprising the first furniture module 110.

By providing only two furniture modules 110, 210 capable of each receiving a seat module in a plurality of orientations, wherein the two furniture modules are mirror images of one another, at least four unique seating configurations may be realised. Further, various components of the first furniture module 110 and the second furniture module 210 will share part commonality due to their common shape, thereby enabling the at least four unique seating configurations to be realised using a suite of standardised components comprising as few unique components as possible.

The form and functionality of the second furniture module 210 is appreciably similar, or identical, to the first furniture module 110. The second furniture module 210 accordingly also comprises a rear partition wall 212, a first side partition wall 214, a second side partition wall 215 and a console 216 where one or more of the rear partition wall 212, the first side partition wall 214 and the console 216 at least partially define the recess 211. Therefore, to avoid unnecessary repetition, the description of each of the various components of the second furniture module 210 and the passenger seating modules 200A, 200B will not be repeated.

The seat modules 120, 220 used for each of the first passenger seating module 100 and the second passenger seating modules 200 are identical, and thus can be swapped around freely. Such a configuration improves the compatibility and the modularity of the passenger seating modules 100, 200. The first furniture module 110 and the second furniture module 210 may also share at least some part commonality.

Figure 3A shows an exemplary passenger seating arrangement 300 in a plan view. The passenger seating arrangement 300 is created by nesting a plurality of passenger seating modules 100A, 100B, 200A, 200B together, each of which is accessible from an aisle A-A'. The passenger seating modules 100A, 100B, 200A, 200B are nested in the forward-aft direction which, in the exemplary embodiment, is parallel to the aisle A-A' and is oriented in the direction of travel.

Figure 3B shows a single column of nested passenger seating modules 100A, 100B, 200A, 200B in a plan view, this column corresponding to the port side column of the passenger seating arrangement 300 shown in figure 3A.

In a first row of the passenger seating arrangement 300 there is provided a pair of inline passenger seating modules 100B, 200B. In a second row, there is provided a pair of reverse herringbone passenger seating modules 100A, 200A. In a third row, there is provided a pair of inline passenger seating modules 200B, 100B. In a fourth row, there is provided a pair of herringbone passenger seating modules 200A, 100A.

The askew, or herringbone, passenger seating module 100A, 200A may be used to realise both herringbone and reverse herringbone seating configurations. A herringbone seating configuration will be understood to be a seating configuration in which the seat module 120, 220 of the passenger seating module 100A, 200A faces towards from the aisle A-A' to which it is adjacent to, or accessible from. A reverse herringbone seating configuration will be understood to be a seating configuration in which the seat module 120, 220 of the passenger seating module 100A, 200A faces away the aisle A-A'.

Each successive row of passenger seating modules 100, 200 comprises a passenger seating module 100, 200 wherein the seat module 110, 210 is directed towards the display 130, 230 and/or footwell of the passenger seating module100, 200 located in the row directly in front. In other words, each passenger seating module 100, 200 is configured to be nested directly in front of equivalent herringbone passenger seating module or its mirror-image inline passenger seating module. By nesting the passenger seating modules 100, 200 in such a way, a passenger is able to fully utilise the functions and features of the passenger seating module 100, 200.

The passenger seating arrangement 300 may be used as the inner seats of a cabin of an aircraft. Where the passenger seating modules 100, 200 are placed adjacent one another as shown in figure 3A, a shared partition wall 114, 115 may be used to separate the passenger seating modules 100, 200. The shared partition wall 114, 115 may be configured to slide such that it is movable between a deployed configuration in which the shared partition wall 114, 115 is fully extended and a stowed configuration in which the shared partition wall 114, 115 is hidden or fully retracted.

As described above and as illustrated in figures 3A and 3B, four possible seating configurations are achieved from a suite of passenger seating module components utilising only a single pair of mirror-image, or symmetric, furniture modules 110, 210. That is, each of the furniture modules 110, 210 in the suite of passenger seating modules may be identical or symmetrical to every other furniture module in the suite.

Accordingly, there is provided a kit of parts for assembling a plurality of passenger seating modules 100, 200, or a passenger seating arrangement 300, comprising: a first furniture module 110; a second furniture module 210; and a seat module 120, 220.

Since both the first furniture module 110 and the second furniture module 210 are configured to receive the seat module 120, 220 in a plurality of orientations, at least four seating configurations can be achieved using only the two furniture modules 110, 210. Accordingly, the plurality of passenger seating modules may consist of first seating modules comprising a first furniture module and second seating modules comprising a second furniture module. In other words, the kit may comprise a set of furniture modules 110, 210, wherein the set of furniture modules 110, 210 consists of, or only comprises, the or a plurality of the first furniture module 110 and the or a plurality of the second furniture module 210. Again, in other words, each of the furniture modules may be identical to or a mirror image to of every other furniture module in the kit.

The kit may comprise a plurality of each of the first furniture module 110, the second furniture module 210 and the seat modules 120, 220. Each of the first furniture module 110, the second furniture module 210 and the seat modules 120, 220 may be provided disassembled, such that the kit comprises a plurality of the components or parts forming each of the first furniture module 110, the second furniture module 210 and the seat modules 120, 220. The kit may comprise a plurality of components or parts common to both the first furniture module 110 and the second furniture module 210.

Optionally, the kit may comprise a plurality of platforms, as described above.

Each furniture module 110, 210 may facilitate a certain level of customisation or refurbishment. For example, each furniture module 110, 210 comprise one or more replaceable parts and/or components that can be replaced to meet the desired requirements for the finalised passenger seating module 100, 200, or retrofitted if an upgrade is desired. Examples of such replaceable and/or customisable components may include areas of the console 116, 216 such as meal tables, storage shelves, environmental controls or the like, or stowage areas; or aspects the partition walls 112, 114, 115, 212, 214, 215 such as displays fitted to the rear partition walls 112, 212 or door functionality of the side partition walls 114, 115, 214, 215. Passenger seating modules 100, 200 located in a front row may also be provided with bespoke furniture units located in front of the passenger seating module 100, 200 to provide superior luxury passenger seating. However, since each passenger module 110, 210 is defined by essentially the same envelope set by the seat module 120, 220 and the furniture module 110, 210, each passenger seating module 100, 200 will be readily modular with one another and will be capable of being formed using a smaller set of base components common to every passenger seating module 100, 200.

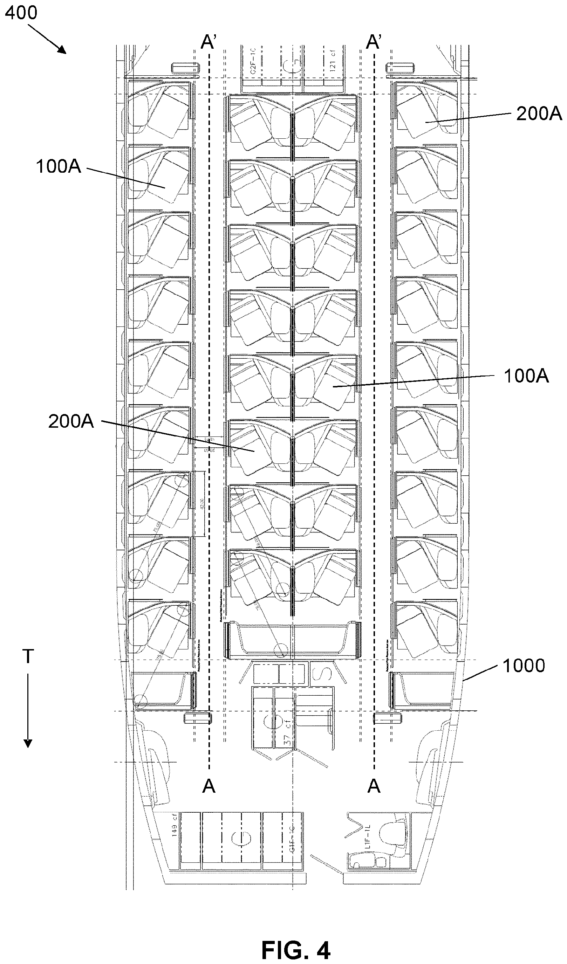

Each of the above-mentioned passenger seating modules 100, 200, a set of passenger seating modules comprising (or consisting of) the first passenger seating modules 100A, 100B and the second passenger seating modules 200A, 200B, or the kit for assembling a plurality of passenger seating modules 100, 200, can be used to assemble any of the passenger seating arrangements 400-900 illustrated in figures 4 to 9, in addition to the aforementioned passenger seating arrangement 300. It will be readily understood that each of the passenger seating arrangements 400-900 discussed herein are provided to illustrate the functionality and configurability of the passenger seating modules 100, 200, and are not exhaustive in regard to the range of possible configurations achievable using the passenger seating modules 100, 200.

To assemble the passenger seating modules 100, 200, the seat module 120, 220 is installed in the recess 111, 211 at a selected orientation, wherein the selected orientation is one of the plurality of orientations. Assembling the passenger seating module 100, 200 may also comprise mounting the furniture module 110, 210 and/or the seat module 120, 220 to the platform, in arrangements where a platform is used or required. Installing the seat module 120, 220 in the recess 111, 211 at the selected orientation may be comprised in the step of mounting the seat module 120, 220 to the platform.

To assemble the passenger seating arrangement 300-900, each passenger seating module 100, 200 is nested directly in front of and/or behind an adjacent passenger seating module 100, 200 in the forward-aft direction. Nesting the passenger seating modules 100, 200 may comprise fixing the platform of each passenger seating module 100, 200 to a floor of a vehicle in which the passenger seating arrangement 300-900 is located and/or fixing the platform of each passenger seating module 100, 200 to the platform of the adjacent passenger seating module 100, 200 located directly in front and/or behind.

In each of figures 4 to 9 the respective passenger seating arrangement is shown within a cabin of a fuselage 1000 of an aircraft. Each of the passenger seating modules 100, 200 are facing in the direction of travel T of the aircraft. A forward portion and aftward portion of the cabin are defined relative to the direction of travel T of the aircraft. The cabin comprises two aisles A-A'. Passenger seating modules 100, 200 located towards the fuselage 1000 of the aircraft, and thus located outside of the aisles A-A', are regarded as forming outer seats of the cabin. Passenger seating modules 100, 200 located away from the fuselage and towards a longitudinal axis of the aircraft 1000, and thus located inside of the aisles A-A', are regarded as forming inner seats of the cabin.

Figure 4 shows a passenger seating arrangement 400 in which each of the passenger seating modules 100A, 200A are provided in a reverse herringbone configuration. The passenger seating modules 100A comprising the first furniture module 110 form the outer starboard side seats and the inner port side seats, and the passenger seating modules 200A comprising the second furniture module 210 form the outer port side seats and the inner starboard side seats.

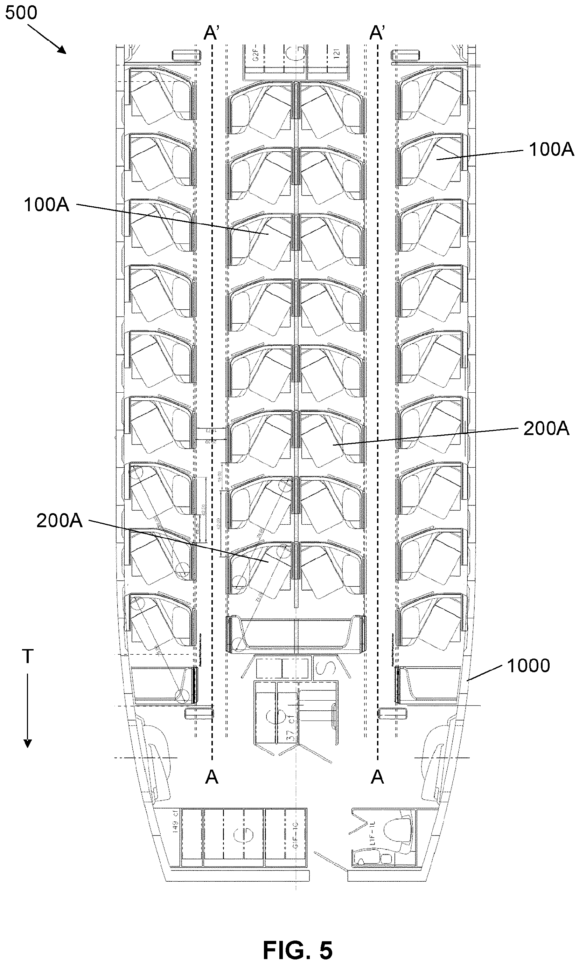

Figure 5 shows a passenger seating arrangement 500 in which each of the passenger seating modules 100, 200 are provided in a herringbone configuration. The passenger seating modules 100A comprising the first furniture module 110 form the inner starboard side seats and the outer port side seats, and the passenger seating modules 200A comprising the second furniture module 210 form the inner port side seats and the outer starboard side seats.

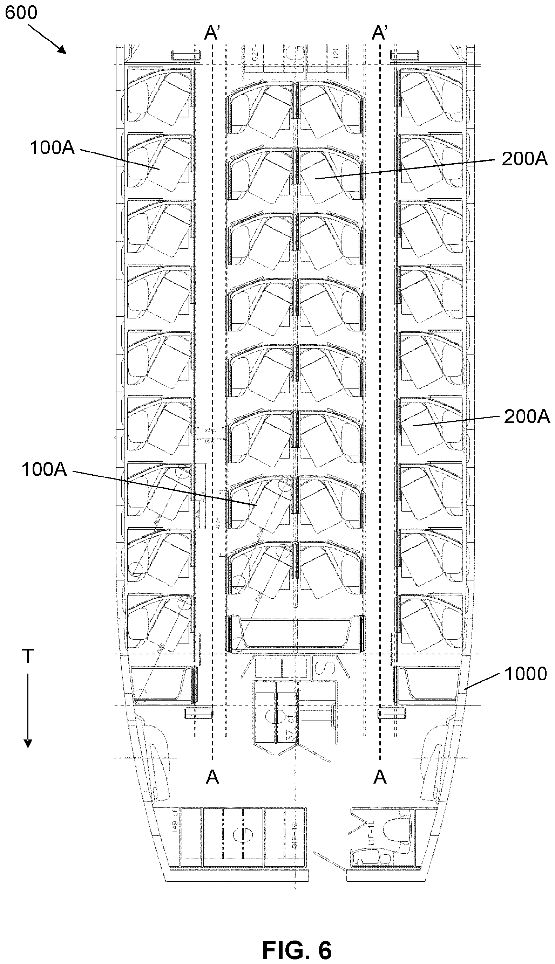

Figure 6 shows a passenger seating arrangement 600 in which the passenger seating modules 100A, 200A forming the inner seats are provided in a herringbone configuration and the passenger seating modules 100A, 200A forming the outer seats are provided in a reverse herringbone configuration. The passenger seating modules 100A comprising the first furniture module 110 form the inner starboard side seats and the outer starboard side seats, and the passenger seating modules 200A comprising the second furniture module 210 form the inner port side seats and the outer port side seats.

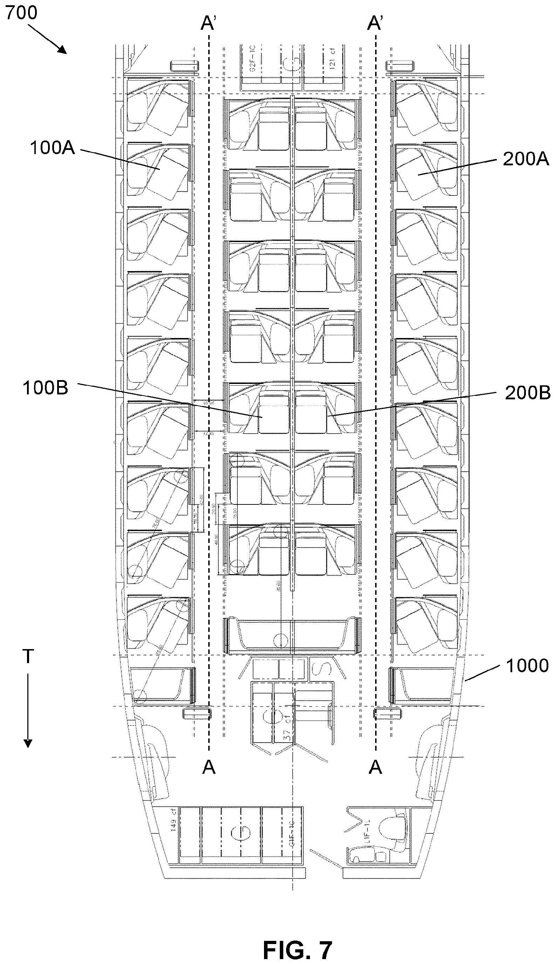

Figure 7 shows a passenger seating arrangement 700 in which the passenger seating modules 100B, 200B forming the inner seats are provided in a staggered inline configuration and the passenger seating modules 100A, 200A forming the inner seats are provided in a reverse herringbone configuration. The passenger seating modules 100B comprising the first furniture module 110 and the passenger seating modules 200B comprising the second furniture module 210 are placed adjacent one another in the inner seats, and alternate with one another along each row such that the seat modules 120, 220 of adjacent rows in the inner seats are staggered relative to one another. The passenger seating modules 100A comprising the first furniture module 110 form the outer starboard side seats, and the passenger seating modules 200A comprising the second furniture module 210 form the outer port side seats.

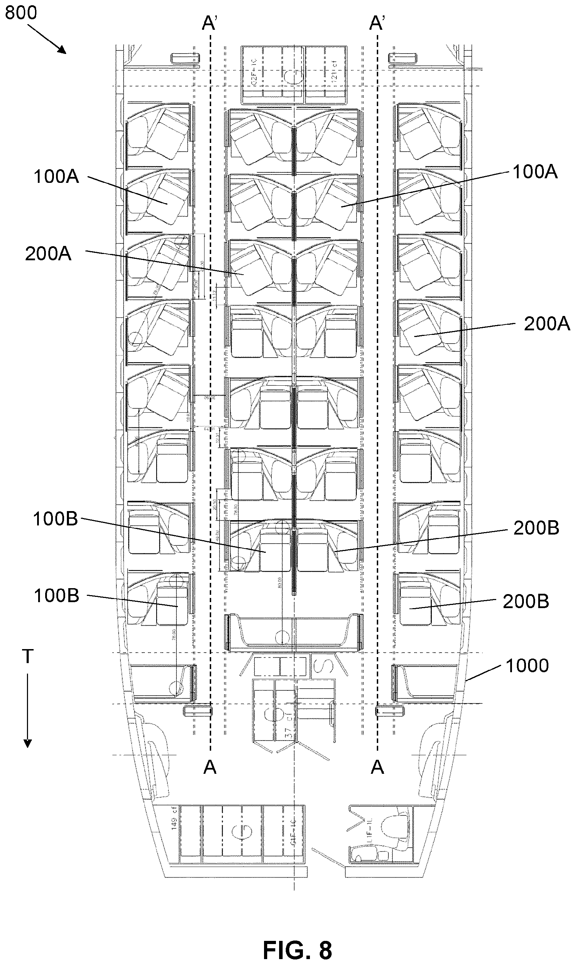

Figure 8 shows a passenger seating arrangement 800 in which the passenger seating modules forming the forward seats are provided in a staggered inline configuration, and the aft seats are provided in a reverse herringbone configuration. The passenger seating modules 100B comprising the first furniture module 110 and the passenger seating modules 200B comprising the second furniture module 210 are used to form the inner and outer seats located towards the front of the cabin by nesting the passenger seating modules 100B, 200B in an alternating fashion. The passenger seating modules 100A comprising the first furniture module 110 form the outer starboard side seats and the inner port side seats and the passenger seating modules 200A comprising the second furniture module 210 form the inner starboard side seats and the outer port side seats, towards the rear of the cabin.

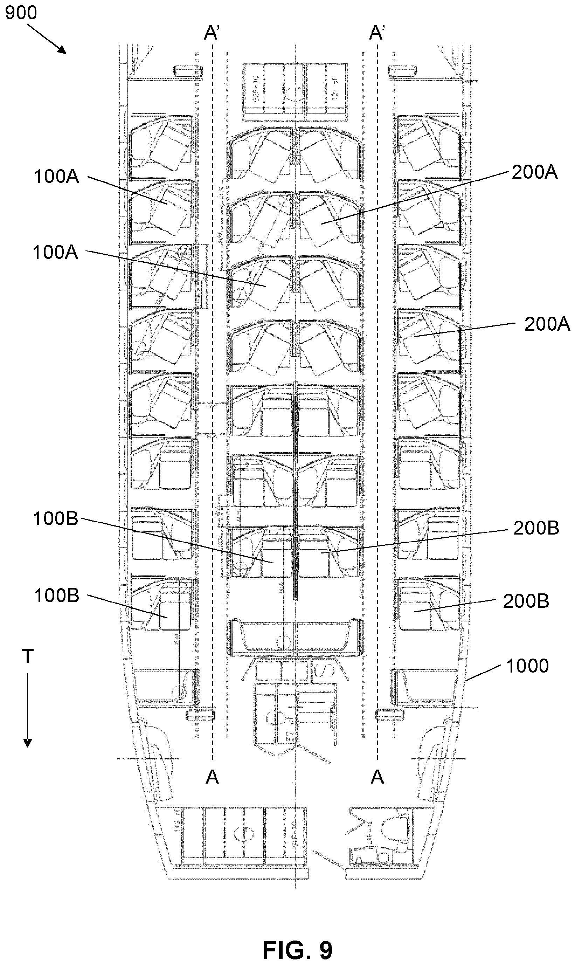

Figure 9 shows a passenger seating arrangement 900 in which the passenger seating modules forming the forwardmost seats are provided in a staggered inline configuration, the passenger seating modules forming the aft outer seats are provided in a reverse herringbone configuration and the passenger seating modules forming the aft inner seats are provided in a herringbone configuration. The passenger seating modules 100B comprising the first furniture module 110 and the passenger seating modules 200B comprising the second furniture module 210 are used to form the inner and outer seats located towards the front of the cabin by nesting the passenger seating modules 100B, 200B in an alternating fashion. The passenger seating modules 100A comprising the first furniture module 110 form the outer starboard side seats and the inner starboard side seats and the passenger seating modules 200A comprising the second furniture module 210 form the inner port side seats and the outer port side seats, towards the rear of the cabin.

The passenger seating modules 100 of each of the above-described embodiments are aircraft cabin seats, and are accordingly passenger seating modules 100 for an aircraft. However, the passenger seating modules 100 and passenger seating arrangements 300-900 of the above-described embodiments are contemplated for use in any commercial passenger vehicle, including but not limited to a railroad vehicle such as a train compartment, a marine vessel such as a ferry or cruise liner, or the like.

## Claims

1. A passenger seating module (100, 200) for nesting with another passenger seating module (100, 200) in a forward-aft direction, comprising:
a seat module (120, 220); and
a furniture module (110, 210) comprising a recess (111, 211) configured to receive the seat module (120, 220);
wherein the recess (111, 211) is configured to receive the seat module (120, 220) in a plurality of orientations.

2. A passenger seating module (100, 200) as claimed in any preceding claim, wherein the recess (111, 211) is configured to receive the seat module (120, 220) at an angle of between 0 and 45 degrees relative to the forward-aft direction.

3. A passenger seating module (100, 200) as claimed in claim 1 or 2, wherein the plurality of orientations includes a first orientation in which the seat module (120, 220) is received at an angle of between 0 and 10 degrees relative to the forward-aft direction.

4. A passenger seating module (100, 200) as claimed in any preceding claim, wherein the plurality of orientations includes a second orientation in which the seat module (120, 220) is received askew relative to the forward-aft direction.

5. A passenger seating module (100, 200) as claimed in 4, wherein the seat module (120, 220) is configured to be received of an angle of between 20 and 40 degrees relative to the forward-aft direction.

6. A passenger seating module (100, 200) as claimed in any preceding claim, comprising:
a platform module,
wherein the seat module (120, 220) is configured to be mounted on the platform module; and
wherein the platform module is configured to secure the seat module (120, 220) in a selected orientation of the plurality of orientations.

7. A passenger seating module (100, 200) as claimed in any preceding claim, wherein the furniture module (110, 210) comprises a rear partition wall (112, 212), a side partition wall (114, 115, 214, 216) and a console (116, 216);
wherein each of the rear partition wall (112, 212), the side partition wall (114, 115, 214, 215) and the console (116, 216) at least partially define the recess (111, 211).

8. A passenger seating module (100, 200) as claimed in any preceding claim, wherein the seat module (120, 220) comprises a seat configured to move between an upright position and a reclined position, optionally wherein the reclined position is a substantially horizontal position.

9. A passenger seating arrangement (300 - 900) comprising:
a plurality of passenger seating modules (100, 200);
wherein each passenger seating module is a passenger seating module as claimed in any preceding claim; and
wherein each passenger seating module (100, 200) is nested directly in front of and/or behind an adjacent passenger seating module (100, 200) in the forward-aft direction.

10. A passenger seating arrangement (300 - 900) as claimed in claim 9, wherein the plurality of passenger seating modules (100, 200) comprises first passenger seating modules (100A, 100B) comprising a first furniture module (110) and second passenger seating modules (200A, 200B) comprising a second furniture module (210); and
wherein the first furniture module (110) and the second furniture module (210) are mirror images of one another.

11. A passenger seating arrangement (300 - 900) as claimed in claim 9 or 10, wherein one of the passenger seating modules (100, 200) comprise a seat module (120, 220) received inline relative to the forward-aft direction, wherein another of the passenger seating modules (100, 200) comprise a seat module (120, 220) received askew relative to the forward-aft direction, and wherein the one and the another passenger seating modules (100, 200) are nested directly adjacent in the forward-aft direction.

12. An aircraft comprising a plurality of passenger seating modules (100, 200) as claimed in any of claims 1 to 8, or a passenger seating arrangement (300 - 900) as claimed in any of claims 9, 10 or 11.

13. A kit of parts for assembling a passenger seating arrangement (300 - 900) as claimed in any of claims 9 to 11, comprising:
a plurality of seat modules (120, 220); and
a plurality of furniture modules (110, 210) comprising a recess (111, 211) configured to receive any one of the plurality of seat modules (120, 220);
wherein each furniture module (110, 210) is configured to receive a respective seat module (120, 220) in a plurality of orientations.

14. A kit of parts as claimed in claim 13, wherein each furniture module (110, 210) is identical to or a mirror image of every other furniture module (110, 210).

15. A method of assembling a passenger seating module (100, 200) as claimed in any of claims 1 to 8, comprising:
installing the seat module (120, 220) in the recess (111, 211) at a selected orientation.
